# EUROPEAN PATENT SPECIFICATION

(11) **EP 4 283 364 B1**
(45) Date of publication and mention of the grant of the patent: **10.06.2026**
(21) Application number: 23171897.4
(22) Date of filing: 05.05.2023
(51) Int. Cl.: G02B 6/44

(54) **CONDUIT CLAMP ASSEMBLY FOR A FIBER CLOSURE**
LEITUNGSKLEMMANORDNUNG FÜR EINEN FASERVERSCHLUSS
ENSEMBLE DE SERRAGE DE CONDUIT POUR UNE FERMETURE DE FIBRE

(30) Priority: 07.05.2022 IN 202211026538
(43) Date of publication of application: 29.11.2023
(73) Proprietor: Sterlite Technologies Limited, Gurugram, Haryana 122102 (IN)
(72) Inventor: Borrelli, Ottavio, 20024 Garbagnate Milanese, Milano (IT); Cirisano, Emanuele Pietro, 20024 Garbagnate Milanese, Milano (IT)
(74) Representative: Petraz, Gilberto Luigi

(56) References cited:
- WO-A2-2012/168292
- US-A1- 2020 049 921

## Description

### TECHNICAL FIELD

Embodiments of the present disclosure relate to the field of junction boxes for optical fiber transmission systems and more particularly, relate to a conduit clamp assembly for a fiber closure.

This application claims the benefit of Indian Application No. 202211026538 titled "CONDUIT CLAMP ASSEMBLY FOR A FIBER CLOSURE" filed by the applicant on May 7, 2022.

### BACKGROUND ART

Telecommunications systems generally employ a large network of telecommunications cables for a transmitting large volume of data and voice signals in long distance communication systems. Optical fiber cables having wide bandwidth and low noise operations exhibits wide applications, for example to enable long distance communications. An optical fiber cable having a plurality of glass fibers each of which is protected by at least one layer of a coating material. The optical fibers may be assembled into units in which the fibers are held together by binder ribbons to provide a core.

During the service life of an optical fiber cable, the cable may be damaged. This may occur, for example, through unintentional contact by various kinds of excavation equipment, by lightning or by repeated attack by animals. Such damages lead to replacement of the complete cable. Therefore, a conventional way to avoid or minimize the above problems is to use a closure, within which all fibers are harnessed and protected environmentally. Further, in cases of disruption, it becomes necessary to restore service and connectivity as quickly as possible.

US Patent 5150930 discloses a connector for corrugated pipes or rods with a housing that allows insertion of a pipe or rod into a bore, through the open end of the connector. The connector also includes a pair of resilient locking members of fingers that are formed on the housing wall such that the pair of resilient locking members are configured to lock into a single valley of corrugations of the pipe and thereby preventing withdrawal of the pipe from the connector.

Another US Patent 5661840 discloses an optical fiber junction box provided with a tray and a base provided with a number of entry holes that allows insertion of corrugated optical conduit into the junction box to allow harnessing of the optical fiber cables such that the optical fiber cables are configured to wrap around the spools provided on the tray.

The above-mentioned prior arts of optical fiber closures are developed to the best they could, still they have limitations when the solutions provided by these prior arts are considered in repair operations. These arrangements and assemblies for providing one or more solutions increase the cost of manufacture and maintenance of the optical fiber network. Also, the times required for the assembly or repair of such optical fiber closures are substantially large.

WO 2012/168292 A2 discloses a conduit clamp assembly of the prior art.

In light of the above-stated discussion, there is an urgent need for a technical solution that overcomes the above-stated limitations to provide a cost effective, rapidly deployable optical fiber network structure and easily repairable solution in anchoring the optical fiber cables to an optical fiber closure in a fast and readily removable manner. Thus, the present disclosure provides a high-quality plug and play arrangement for optical fiber cables in optical fiber closure.

### SUMMARY OF THE DISCLOSURE

The invention relates to a conduit clamp assembly as defined in appended claim 1. Further embodiments of the invention are defined in the dependent claims.

### BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.
Fig.1A is a pictorial snapshot illustrating a front view of a fiber closure in accordance with an embodiment of the present disclosure;
Fig.1B is a pictorial snapshot illustrating a perspective view of the fiber closure in accordance with an embodiment of the present disclosure;
Fig. 2 is a pictorial snapshot illustrating a collapsed view of the conduit clamp assembly with one first part in accordance with an embodiment of the present disclosure;
Fig. 3 is a pictorial snapshot illustrating an exploded view of a conduit clamp assembly with one first part in accordance with an embodiment of the present disclosure;
Fig. 4 is a pictorial snapshot illustrating a packed view (collapsed view) of the conduit clamp assembly provided with more than one first part, i.e., two first parts in accordance with an embodiment of the present disclosure;
Fig. 5 is a pictorial snapshot illustrating an exploded view of the conduit clamp assembly such that the conduit clamp assembly is provided with more than one first part, i.e., two first parts in accordance with an embodiment of the present disclosure;
Fig. 6 is a pictorial snapshot illustrating a packed view (collapsed view) of the conduit clamp assembly without using the wrap in accordance with an embodiment of the present disclosure;
Fig. 7 is a pictorial snapshot illustrating the conduit clamp assembly in an assembled configuration such that the conduit clamp assembly holds a corrugated cable in accordance with an embodiment of the present disclosure;
Fig. 8 is a pictorial snapshot illustrating installation of the conduit clamp assembly on a base of a fiber closure such that the conduit clamp assembly is provided with one first part in accordance with an embodiment of the present disclosure;
Fig. 9 is a pictorial snapshot illustrating installation of the conduit clamp assembly on a base of the fiber closure such that the conduit clamp assembly is provided with more than one first parts, i.e., two first parts in accordance with an embodiment of the present disclosure;
Fig. 10 is a pictorial snapshot illustrating the second end of the base of the fiber closure in accordance with an embodiment of the present disclosure;
Fig. 11 is a pictorial snapshot illustrating connection of a bracket of the conduit clamp assembly with a conductive strip of a closure frame of the base in accordance with an embodiment of the present disclosure.

The conduit clamp assembly is illustrated in the accompanying drawings, which like reference letters indicate corresponding parts in the various figures. It should be noted that the accompanying figure is intended to present illustrations of exemplary embodiments of the present disclosure. This figure is not intended to limit the scope of the present disclosure. It should also be noted that the accompanying figure is not necessarily drawn to scale.

### DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.

### Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". Throughout this specification, unless the context requires otherwise the word "comprise", and variations such as "comprises" and "comprising", will be understood to imply the inclusion of a stated element or step or group of element or steps but not the exclusion of any other element or step or group of element or steps.

The term "including" is used to mean "including but not limited to". "Including" and "including but not limited to" are used interchangeably.

The term "corrugated conduit" as used herein the context of the present disclosure refers to a conduit/pipe that is adapted to allow passing of one or more optical fibers. The term "corrugated" in context to the corrugated conduit refers to ridges that are provided on the outer surface of the conduit.

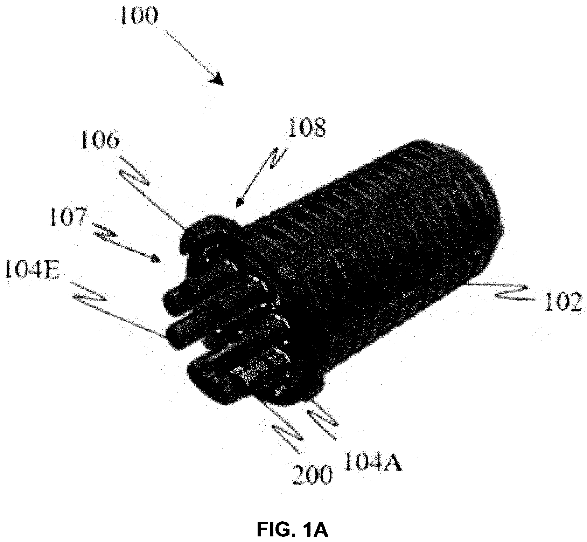

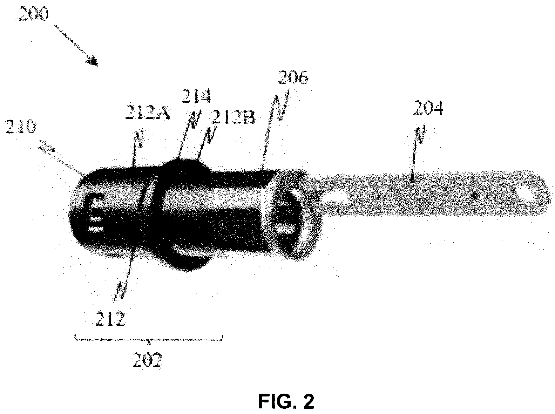

Fig.1A are pictorial snapshots illustrating a different view of the fiber closure 100 in accordance with an embodiment of the present disclosure. The fiber closure 100 has a base 106 with a first side 107 and a second side 108. In particular, the first side 107 of the base 106 have one or more ports of which first through fifth ports 104A-104E. Moreover, the first through fifth ports 104A-104E may be an elongated hollow port exhibiting a cylindrical shape. Further, the first through fifth ports 104A-104E may extend from the first side 107 of the base 106. Specifically, FIG.1A illustrates a packed view of a conduit clamp assembly 200 (as shown later in FIG.2) inserted into the first through fifth ports 104A-104E of the base 106. Various components of the conduit clamp assembly and the conduit clamp assembly may be adapted to work/position/function/configure in the same manner/fashion, when the conduit clamp assembly is removably coupled to the first through fifth ports 104A-104E of the base 106 in the fiber closure 100.

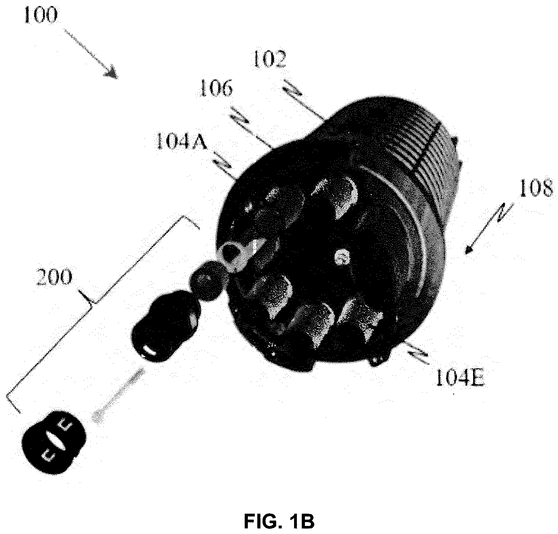

Referring to Fig. 1B illustrates a front view of a fiber closure 100 and exploded view of the conduit clamp assembly 200 that is inserted into the first through fifth ports 104A-104E of the base 106. The fiber closure 100 has the base 106 and a cover 102. In particular, the cover 102 is adapted to removably attached to the second side 108 of the base 106. Moreover, the cover 102 may be therefore adapted to cover the second side 108 of the base 106. Further, the insertion of the conduit clamp assembly 200 is inserted into the first through fifth ports 104A-104E of the base 106 such that the cover 102 covers the second side 108 of the base 106.

In accordance with an embodiment of the present disclosure, one or more than one conduit clamp assemblies 200 may be removably engaged with the first through fifth ports 104A-104E of the fiber closure 100.

Although FIG.1A and FIG.1B illustrate five ports (*i.e.,* the first through fifth ports 104A-104E), it will be apparent to a person skilled in the art that the scope of the present disclosure is not limited to it. In various other aspects, the one or more ports may have any number of ports without deviating from the scope of the present disclosure. In such a scenario, each port may be adapted to perform one or more functionalities in a manner similar to the operations of the functionalities of the first through fifth port 104A-104E as described herein.

In accordance with an embodiment of the present disclosure, the base 106 may be fabricated using a molding material such as, but not limited to, Polycarbonate (PC), Acrylonitrile butadiene styrene (ABS), Polypropylene (PP), Nylon Plastic (PA), a Glass-filled polymer material, and the like. Aspects of the present disclosure are intended to have and/or otherwise cover any type of the molding material for the base 106. Aspects of the present disclosure are intended to have and/or otherwise cover any material for the base 106 that is suitable for the base 106, including known, related and later developed materials.

In accordance with an embodiment of the present disclosure, the fiber closure 100 may be fabricated using a molding material such as, but not limited to, Polycarbonate (PC), Acrylonitrile butadiene styrene (ABS), Polypropylene (PP), Nylon Plastic (PA), a Glass-filled polymer material, and the like. Aspects of the present disclosure are intended to have and/or otherwise cover any type of the molding material for the fiber closure 100. Aspects of the present disclosure are intended to have and/or otherwise cover any material for the fiber closure 100 that is suitable for the fiber closure 100, including known, related and later developed materials.

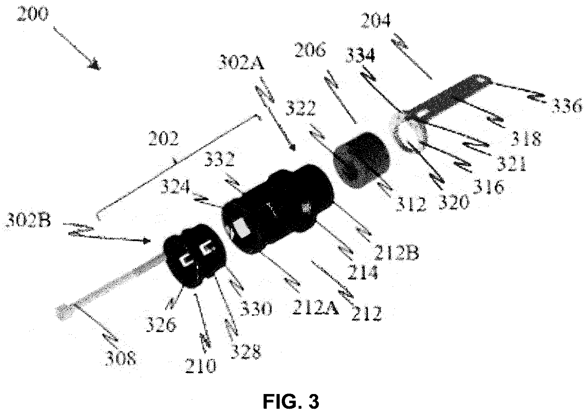

Fig. 2 is a pictorial snapshot illustrating a collapsed view of the conduit clamp assembly 200 with one first part in accordance with an embodiment of the present disclosure. In particular, the conduit clamp assembly 200 may have a conduit clamp body 202 (later shown in Fig. 3), a bracket 204, a wrap 206, and one or more removable engagement means 308 (later shown in Fig. 3). Moreover, the conduit clamp assembly 200 may be adapted to hold one or more corrugated conduits with the fiber closure 100. Further, the conduit clamp assembly 200 may be adapted for the one or more corrugated conduits used for passage of one or more optical fibers in the fiber closure 100.

Fig. 3 is a pictorial snapshot illustrating an exploded view of a conduit clamp assembly 200 with one first part in accordance with an embodiment of the present disclosure. The conduit clamp body 202 has a proximal end 302A and a distal end 302B adapted to mount in a port of first through fifth ports 104A-104E of the fiber closure 100. Further, the conduit clamp body 202 may have a first part 210 is adapted to be partially inserted into the second part 212 to form the conduit clamp body 202. As illustrated, the conduit clamp body 202 may have a fin 214, which may be circumferentially disposed on the conduit clamp body 202. The fin 214 is configured to allow insertion of a predefined length of the conduit clamp body 202 into the port of the first through fifth ports 104A-104E of the fiber closure 100.

And, the second part 212 of the conduit clamp body 202 has a first portion 212A and a second portion 212B. In particular, the first part 210 may have one or more through holes 326, one or more retention tabs 328, and one or more latches 330. Moreover, the one or more retention tabs 328 are provided on the external surface of the first part 210 and the one or more latches 330 may be provided on the internal surface of the first part 210. Further, the one or more latches 330 of the first part 210 may be configured to hold or engaged with the one or more corrugated conduits of the one or more corrugated conduits. The first portion 212A may have one or more through holes 324 and one or more receivers 332 provided on the surface of the first portion 212A of the second part 212 of the conduit clamp body 202.

In accordance with an embodiment of the present disclosure, the fin 214 may be an elevated portion on the conduit clamp body 202 such that the fin 214 is disposed between the first portion 212A and the second portion 212B of the second part 212 and thereby separating the first portion 212A and the second portion 212B of the second part 212.

In accordance with an embodiment of the present disclosure, the one or more through holes 326 of the first part 210 may be configured to partially insert into the one or more through holes 324 of the first portion 212A of the second part 212 of the conduit clamp body 202. In particular, the one or more retention tabs 328 of the first part 210 may be configured to engage with the one or more receivers 332 of the first portion 212A of the second part 212 to form the conduit clamp body 202. Further, the first portion 212A of the second part 212 may be adapted to accept the one or more corrugated conduits for clamping (for example one of the corrugated conduits of the one or more corrugated conduits).

In accordance with an embodiment of the present disclosure, the bracket 204 may have a bracket base 316, an elongated structure 318, a body end 334, and a base end 336. The body end 334 of the bracket 204 is the end near to the bracket base 316 and the base end 336 of the bracket 204 may be the end away from the bracket base 316 or the body end 334. Moreover, the bracket 204 may be mounted to a proximal end 302A of the conduit clamp body 202 such that the body end 334 may be mounted on the conduit clamp body 302 and the base end 336 may be mounted on the base 106 of the fiber closure 100. Further, the bracket base 316 has one or more bracket through holes 320 such that the one or more bracket through holes 320 of the bracket 204 may be configured to accept one or more optical fibers extending from the one or more corrugated conduits, respectively for clamping. Furthermore, the elongated structure 318 may be configured such that the elongated structure 318 extends substantially perpendicular to the bracket base 316.

In accordance with an embodiment of the present disclosure, the bracket 204 may be an elongated rigid structure. The term elongated rigid structure as used herein refers to the rigid structure having a longitudinally extending portion projecting from one end to the other end of the bracket 204.

In some aspects, the elongated structure 318 may be substantially perpendicular to an angle of +-10 degrees with respect to the bracket base 316. Particularly, the bracket base 316 and the elongated structure 318 of the bracket 204 may be a monolith structure. Therefore, the bracket base 316 and the elongated structure 318 may be fabricated as a single piece of material.

The bracket base 316 may be configured to be mounted between the wrap 206 and the base 106 of the fiber closure 100. The wrap 206 may be configured to be interconnected between the second portion 212B of the second part 212 and the bracket base 316 of the bracket 204 by virtue of the removable engagement means 308. Particularly, the removable engagement means 308 may be adapted to couple the bracket 204 to the conduit clamp body 202. Moreover, the removable engagement means 308 is configured to pass from the through holes 326 of the first part 210, from an aperture 312 of the wrap 206, and from a slot 321 provided on the bracket base 316 of the bracket 204, in order to couple the bracket 204 to the conduit clamp body 202.

In some aspects, the one or more removable engagement means 308 may be one or more screws that are adapted to couple the bracket 204 to the conduit clamp body 202.

In accordance with an embodiment of the present disclosure, the bracket 204 may be an elongated rigid structure. The term elongated rigid structure as used herein refers to the rigid structure having a longitudinally extending portion projecting from one end to the other end of the bracket 204.

In accordance with an embodiment of the present disclosure, the wrap 206 may be disposed adjacent to the proximal end 302A of the conduit clamp body 202 such that the wrap 206 may be disposed between the bracket 204 and the conduit clamp body 202. The wrap 206 may have one or more wrap through holes 322. The one or more wrap through holes 322 may be adapted to accept one or more optical fibers extending from one or more corrugated conduits respectively for clamping. Various components of the first part 210, the second part 212, the wrap 206, and the bracket 204 may be exercised in/used in/configured in/exhibited in or included in the same conduit clamp assembly 200, when the components of the conduit clamp assembly 200 are multiple in number.

In accordance with an embodiment of the present disclosure, the conduit clamp assembly 200 and the components of the conduit clamp assembly 200 may be fabricated using a molding material such as, but not limited to, Polycarbonate (PC), Acrylonitrile butadiene styrene (ABS), Polypropylene (PP), Nylon Plastic (PA), a Glass-filled polymer material, and the like. Aspects of the present disclosure are intended to have and/or otherwise cover any type of the molding material for the conduit clamp assembly 200. Aspects of the present disclosure are intended to have and/or otherwise cover any material for the conduit clamp assembly 200 that is suitable for the conduit clamp assembly 200, including known, related and later developed materials.

In some aspects, material of the wrap 206 may be silicone rubber. Aspects of the present disclosure are intended to have and/or otherwise cover any material for the wrap 206 that is suitable for the wrap 206 including known, related and later developed materials. Although FIG.3 illustrates that the one or more removable engagement means have one removable engagement means (*i.e.,* the removable engagement means 308), it will be apparent to a person skilled in the art that the scope of the present disclosure is not limited to it. In various other aspects, the one or more removable engagement means may have any number of removable engagement means without deviating from the scope of the present disclosure. In such a scenario, each screw may be adapted to perform one or more functionalities in a manner similar to the operations of the functionalities of the removable engagement means 308 as described herein.

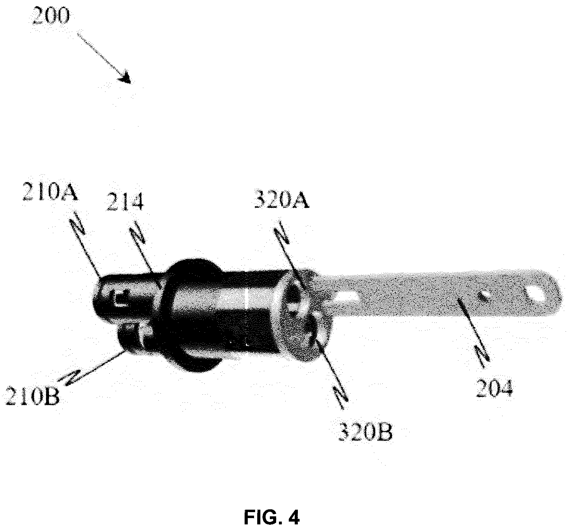

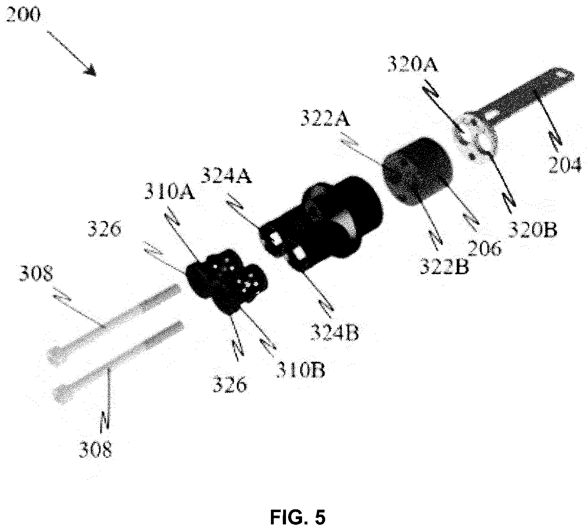

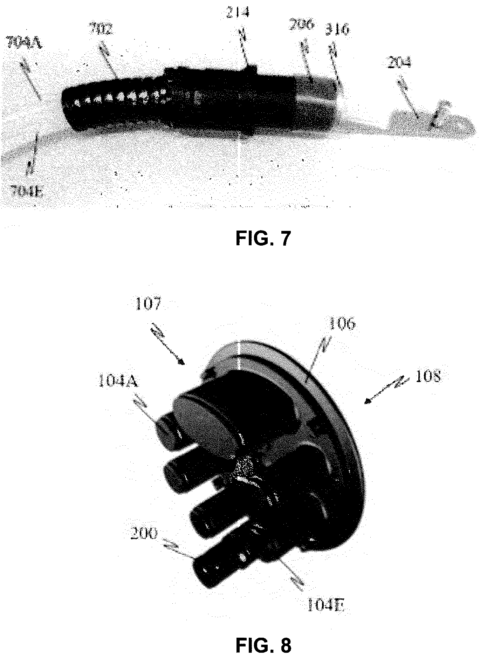

Fig. 4 is a pictorial snapshot illustrating a packed view (collapsed view) of the conduit clamp assembly 200 provided with more than one first part, i.e., two first parts 210A, 210B in accordance with an embodiment of the present disclosure. In particular. the one or more through holes 326 of the first parts 210A, 210B may be inserted into the one or more through holes 324 of the second part 212 in the collapsed configuration. Moreover, the one or more through holes 324 of the second part 312 may be arranged in conformity with the wrap through holes 322 (later shown in Fig. 5) and with the one or more bracket through holes 320 such that the one or more corrugated conduits are passed through the conduit clamp assembly 200 and the one or more optical fibers extending from one or more corrugated conduits (as shown later in FIG.7).

Various components as used herein for the conduit clamp assembly 200, according to an aspect of the present disclosure are configured/arranged/positioned in the same fashion or manner as the components of the conduit clamp assembly 200, according to other aspects of the present disclosure. The components of the conduit clamp assembly 200 of various aspects of the present disclosure may exhibit different viable shapes and may feature a number of redundant sub-components that facilitate holding of the one or more corrugated conduits within the conduit clamp assembly 200.

Fig. 5 is a pictorial snapshot illustrating an exploded view of the conduit clamp assembly 200 such that the conduit clamp assembly is provided with more than one first part, i.e., two first parts in accordance with an embodiment of the present disclosure. The conduit clamp assembly 200 may have more than one first parts 310, for example two first parts 310 i.e., the first parts 310A, 310B (hereinafter individually referred to and designated as "the first part 310" and collectively referred to and designated as "the first parts 310A, 310B), as shown in FIG.5. In particular, each first part of the first parts 310A, 310B may have one or more through holes 326. Moreover, the first portion 212A of the second part 212 of the conduit clamp assembly 200 may have two through holes 324A, 324B (hereinafter individually referred to and designated as "the through hole 324" and collectively referred to and designated as "the through holes 324A, 324B). Further, the one or more through holes 326 of the first parts 310A, 310B may be aligned in conformity with the through holes 324A, 324B of the second part 212. The wrap 206 may have more than one wrap through holes, for example two wrap through holes 322A, 322B (hereinafter collectively referred to and designated as "the wrap through holes 322"). The wrap through holes 322 may be aligned in conformity with the through holes 324A, 324B of the second part 212 of the conduit clamp body 202.

The bracket 204 may have the one or more bracket through holes 320, for example two bracket through holes 320A, 320B (hereinafter collectively referred to and designated as "the bracket through holes 320). Various components of the first part 210, the second part 212, the wrap 206, and the bracket 204 of the conduit clamp assembly 200 may be exercised in/used in/configured in/exhibited in or included in another corresponding components of the conduit clamp assembly 200, when more than one conduit clamp assemblies 200 are used for enablement of the present disclosure.

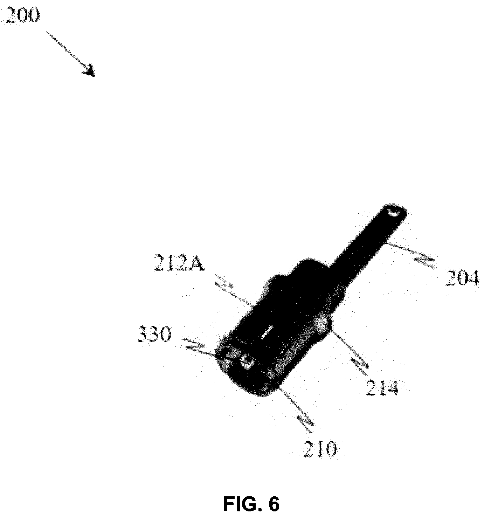

Fig. 6 is a pictorial snapshot illustrating a packed view (collapsed view) of the conduit clamp assembly without using the wrap in accordance with an embodiment of the present disclosure. The conduit clamp assembly 200 may be assembled without using the wrap 206 while mounting the conduit clamp assembly 200 with the first through fifth ports 104A-104E of the base 106 of the fiber closure 100.

Fig. 7 is a pictorial snapshot illustrating the conduit clamp assembly 200 in an assembled configuration such that the conduit clamp assembly 200 holds a corrugated conduit 702 in accordance with an embodiment of the present disclosure. In the assembled configuration of the conduit clamp assembly 200, the one or more through holes 326 of the first part 210 may be partially inserted into the one or more through holes 324 of the first portion 212A of the second part 212. While inserting the one or more through holes 326 of the first part 210 into the one or more through holes 324 of the first portion 212A of the second part 212, the one or more retention tabs 328 of the first part 210 is adapted to receive within the one or more receivers 332 of the first portion 212A of the second part 212. This receiving of the one or more retention tabs 328 within the one or more receivers 332 holds the first part 210 with the second part 212.

Further, the conduit clamp assembly 200 is configured to hold or grasp a corrugated conduit 702 in the assembled configuration. The corrugated conduit 702 may be adapted to pass through the distal end 302B of the conduit clamp body 202 such that the corrugated conduit 702 passes through the one or more through holes 326 of the first part 210.

In the assembled configuration, the one or more latches 330 of the first part 210 engages with the corrugations/recesses of the corrugated conduit 702 such that the corrugated conduit 702 is held firmly within the one or more through holes 326 of the first part 210. In some aspects, the conduit clamp assembly 200 may be configured to hold or grasp the one or more corrugated conduits 702, for which holding of the one corrugated conduit 702. Alternatively, the conduit clamp assembly 200 may be configured to hold more than one corrugated conduit 702.

In accordance with an embodiment of the present disclosure, the corrugated conduit 702 may be configured to hold one or more optical fibers 704A-704E (hereinafter individually referred to and designated as "the optical fiber 704" and collectively referred to and designated as "the optical fibers 704") such that the one or more optical fibers 704 pass through the corrugated conduit 702. Particularly, the one or more optical fibers 704 may be configured to pass through the one or more holes of the first portion 212A of the second part 212. After that the one or more optical fibers 704 may be configured to pass through the one or more wrap through holes 322 of the wrap 206 and then through the one or more bracket through holes 320 of the bracket 204. Eventually, the one or more optical fibers 704 may be configured to exit through the one or more bracket through holes 320 of the bracket 204.

Fig. 8 is a pictorial snapshot illustrating installation of the conduit clamp assembly on a base of a fiber closure such that the conduit clamp assembly is provided with one first part in accordance with an embodiment of the present disclosure. The conduit clamp assembly 200 may be removably engaged with the first through fifth ports 104A-104E of the base 106 of the fiber closure 100. Moreover, the conduit clamp assembly 200 has one first part 210 and one second part 212 with one through hole 224 with the first through fifth ports 104A-104E of the base 106 of the fiber closure 100.

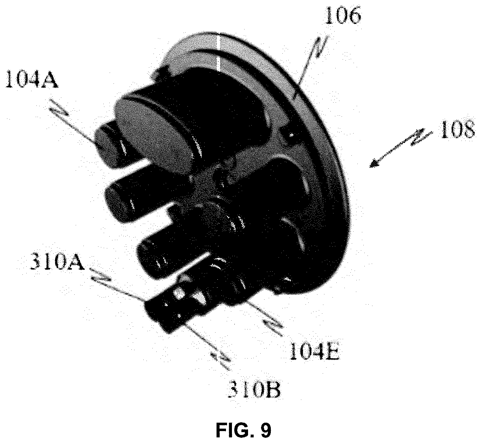

Fig. 9 is a pictorial snapshot illustrating installation of the conduit clamp assembly 200 on the base 106 of the fiber closure 100 such that the conduit clamp assembly 200 is provided with more than one first parts 210, for example two first parts 210A, 210B. The conduit clamp assembly 200 may be adapted to mount with the first through fifth ports 104A-104E of the base 106 of the fiber closure. The first through fifth ports 104A-104E may be filled with a resin material to facilitate sealing of the conduit clamp assembly 200 when the conduit clamp assembly 200 is mounted in the first through fifth ports 104A-104E of the base 106 of the fiber closure 100. Alternatively, the first through fifth ports 104A-104E may be filled with a compressing element. The compressing element may have, but not limited to, a rubber gasket, a seal or the like. The compressing element may be adapted to adhere to the one or more optical fibers 704 and to the inner surface of each port of the first through fifth ports 104A-104E. Aspects of the present disclosure are intended to have and/or otherwise cover any type of the compressing material, including known, related and later developed materials.

In some aspects, one or more than one conduit clamp assemblies 200 may be removably engaged with the first through fifth ports 104A-104E of the base 106 of the fiber closure 100.

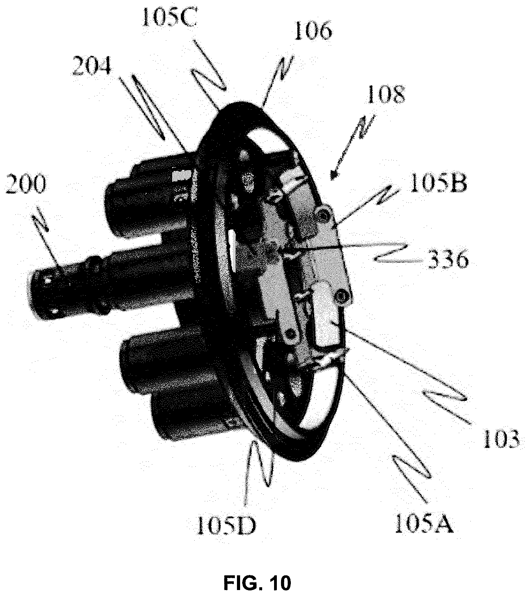

Fig. 10 is a pictorial snapshot illustrating the second end 108 of the base 106 of the fiber closure 100 in accordance with an embodiment of the present disclosure. In particular, the base 106 may have a closure frame 103 with one or more conductive strips of which first through fourth conductive strips 105A-105D. The first through fourth conductive strips 105A-105D may project outwardly from the closure frame 103. Further, the bracket 204 of the conduit clamp assembly 200 may be coupled to at least a component of the closure frame 103 of the base 106 of the fiber closure 100.

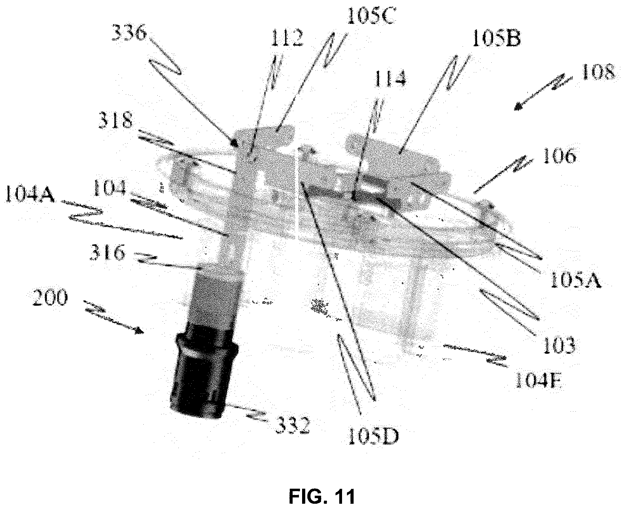

Fig. 11 is a pictorial snapshot illustrating connection of a bracket 204 of the conduit clamp assembly 200 with a conductive strip of a closure frame of the base in accordance with an embodiment of the present disclosure. In particular, the connection of the bracket 204 with the first through fourth conductive strips 105A-105D of the closure frame 103 of the base 106 of the fiber closure 100. The closure frame 103 may be provided on the second side 108 of the base 106. The elongated structure 318 of the bracket 204 projects from the first through fifth ports 104A-104E of the base 106 to the second side 108 of the base 106. The closure frame 103 of the base 106 may be configured for mounting one or more fiber management components in the fiber closure.

The closure frame 103 may be mounted on the base 106 by way of first set of fasteners, for example one of such fastener 114 (hereinafter referred to as "the first fastener") is shown. The base end 336 of the bracket 204 may be electrically coupled to each conductive strip of the first through fourth conductive strips 105A-105D by way of second set of fasteners, for example one of such fastener 112 (hereinafter referred to as "the second fastener") is shown. Each conductive strip of the first through fourth conductive strips 105A-105D of the closure frame 103 may be coupled to the bracket 204 of one or more conduit clamp assemblies 200.

In an exemplary example, the bracket 204 of the one or more conduit clamp assemblies 200 may be electrically coupled on either ends of each conductive strip of the first through fourth conductive strips 105A-105D by way of the second fastener 112. The bracket 204 of one of the conduit clamp assemblies 200 being electrically coupled to one of the conductive strips of the first through fourth conductive strips 105A-105D is shown. The elongated structure 318 of the bracket 204 may be coupled to an end of one of the conductive strips of the first through fourth conductive strips 105A-105D to maintain electrical connection between the bracket 204 and the closure frame 103.

Although FIG.11 illustrates that the one or more conductive strips have four conductive strips (*i.e.,* the first through fourth conductive strips 105A-105D ), it will be apparent to a person skilled in the art that the scope of the present disclosure is not limited to it. In various other aspects, the one or more conductive strips may have any number of conductive strips without deviating from the scope of the present disclosure. In such a scenario, each conductive strip may be adapted to perform one or more functionalities in a manner similar to the operations of the functionalities of the first through fourth conductive strips 105A-105D as described herein.

A person of ordinary skill in the art may be aware that, in combination with the examples described in the embodiments disclosed in this specification, units and algorithm steps may be implemented by electronic hardware, computer software, or a combination thereof.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated.

Disjunctive language such as the phrase "at least one of X, Y, Z," unless specifically stated otherwise, is otherwise understood with the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present.

In a case that no conflict occurs, the embodiments in the present disclosure and the features in the embodiments may be mutually combined. The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

## Claims

1. A conduit clamp assembly (200) comprising:
a conduit clamp body (202) adapted to be engaged with a port of one or more ports (104A-104E) of a fiber closure (100), wherein the conduit clamp body (202) comprises a fin (214) that is circumferentially disposed on the conduit clamp body (202) such that the fin (214) allows insertion of a predefined length of the conduit clamp body (202) into the port of the one or more ports (104A-104E);
wherein the conduit clamp body (202) further comprises a first part (210) having one or more through holes (326) and a second part (212) having a first portion (212A) and a second portion (212B) such that the first portion (212A) comprises one or more through holes (324), wherein the one or more through holes (326) of the first part (210) are at least partially inserted into the one or more through holes (324) of the first portion (212A) of the second part (212); and
a bracket (204) comprising a circular bracket base (316) and an elongated structure (318) that is substantially perpendicular to the circular bracket base (316), wherein the bracket (204) is mounted to a proximal end (302A) of the conduit clamp body (202)
**characterized in that** a removable engagement means (308) passes from the holes (326) of the first part (210) and from a slot (321) provided on the circular bracket base (316) of the bracket (204), in order to couple the bracket (204) to the conduit clamp body (202).

2. The conduit clamp assembly (200) as claimed in claim 1, wherein the bracket (204) further comprises one or more bracket through holes (320, 320A, 320B) adapted to accept one or more optical fibers (704A-704E) extending from one or more corrugated conduits (702), respectively.

3. The conduit clamp assembly (200) as claimed in claim 2, further comprising
a wrap (206) made up of a compressible element such that the wrap (206) is disposed adjacent to the proximal end (302A) of the conduit clamp body (202),
wherein the wrap (206) comprises one or more wrap through holes (322, 322A, 322B) to accept the one or more optical fibers (704) extending from the one or more corrugated conduits (702), respectively.

4. The conduit clamp assembly (200) as claimed in claim 2 or 3, wherein the first portion (212A) of the second part (212) is adapted to accept the one or more corrugated conduits (702).

5. The conduit clamp assembly (200) as claimed in claim 1, wherein the first part (210) comprises one or more retention tabs (328) on an external surface and the second part (212) comprises one or more receivers (332) such that the one or more receivers (332) are adapted to receive the one or more retention tabs (328) of the second part (212).

6. The conduit clamp assembly (200) as claimed in any one of claims 2-4, wherein the first part (210) further comprises one or more latches (330) on an internal surface that are adapted to be engaged with a corrugated conduit of the one or more corrugated conduits (702).

7. The conduit clamp assembly (200) as claimed in claim 1, wherein the elongated structure (318) is substantially perpendicular +-10 degrees to the circular bracket base (316).

8. The conduit clamp assembly (200) as claimed in claim 1, wherein the bracket (204) further comprises a body end (334) and a base end (336) such that the body end (334) is mounted on the conduit clamp body (202) and the base end (336) is configured to be mounted on a base (106) of the fiber closure (100).

9. The conduit clamp assembly (200) as claimed in claim 1, wherein the circular bracket base (316) and the elongated structure (318) are monolithic structures.

10. The conduit clamp assembly (200) as claimed in claim 1, wherein the fin (214) is an elevated portion on the conduit clamp body (202) disposed between the first portion (212A) and the second portion (212B) of the second part (212).

11. A fiber closure (100) comprising:
a base (106) having a first side (107) and a second side (108);
one or more ports (104A-104E) disposed on the first side (107) of the base (106), wherein each port of the one or more ports (104A-104E) is an elongated hollow cylinder extending on the first side (107) of the base (106);
one or more conduit clamp assemblies (200) as claimed in claim 1.

12. The fiber closure (100) as claimed in claim 11 and wherein the one or more conduit clamp assemblies are according to any one of claims 2-4, further comprising
a cover that (102) is adapted to be removably attached to the second side (108) of the base (106);
a wrap (206) made up of a compressible element such that the wrap (206) is disposed between the bracket (204) and the conduit clamp body (202), wherein the wrap (206) comprises one or more wrap through holes (322) to accept the one or more optical fibers (704) extending from the one or more corrugated conduits (702), respectively.

## Patentansprüche

1. Rohrklemmanordnung (200) umfassend:
einen Rohrklemmkörper (202), der dazu geeignet ist, mit einem Anschluss von einem oder mehreren Anschlüssen (104A-104E) eines Faserverschlusses (100) in Eingriff gebracht zu werden, worin der Rohrklemmkörper (202) eine Rippe (214) umfasst, die am Rohrklemmkörper (202) derart umfangsmäßig angeordnet ist, dass die Rippe (214) die Einfügung einer vordefinierten Länge des Rohrklemmkörpers (202) in den Anschluss des einen oder der mehreren Anschlüsse (104A-104E) ermöglicht;
worin der Rohrklemmkörper (202) ferner einen ersten Teil (210), der ein oder mehrere Durchgangslöcher (326) hat, und einen zweiten Teil (212), der einen ersten Abschnitt (212A) und einen zweiten Abschnitt (212B) derart umfasst, dass der erste Abschnitt (212A) ein oder mehrere Durchgangslöcher (324) umfasst, worin das eine oder die mehreren Durchgangslöcher (326) des ersten Teils (210) zumindest teilweise in das eine oder die mehreren Durchgangslöcher (324) des ersten Abschnitts (212A) des zweiten Teils (212) eingefügt sind;
und
einen Bügel (204) umfassend eine kreisförmige Bügelbasis (316) und eine längliche Struktur (318), die zur kreisförmigen Bügelbasis (316) im Wesentlichen senkrecht ist, worin der Bügel (204) an einem proximalen Ende (302A) des Rohrklemmkörpers (202) montiert ist,
**dadurch gekennzeichnet, dass**
ein abnehmbares Eingriffsmittel (308) von den Löchern (326) des ersten Teils (210) und von einem Schlitz (321), der an der kreisförmigen Bügelbasis (316) des Bügels (204) vorgesehen ist, läuft, um den Bügel (204) mit dem Rohrklemmkörper (202) zu koppeln.

2. Rohrklemmanordnung (200) nach Anspruch 1, worin der Bügel (204) ferner ein oder mehrere Bügeldurchgangslöcher (320, 320A, 320B) umfasst, die dazu geeignet sind, eine oder mehrere optische Fasern (704A-704E) aufzunehmen, die sich jeweils von einem oder mehreren Wellenrohren (702) erstrecken.

3. Rohrklemmanordnung (200) nach Anspruch 2, ferner umfassend eine Umwicklung (206), die aus einem komprimierbaren Element derart hergestellt ist, dass die Umwicklung (206) an das proximale Ende (302A) des Rohrklemmkörpers (202) angrenzend angeordnet ist,
worin die Umwicklung (206) ein oder mehrere Umwicklungsdurchgangslöcher (322, 322A, 322B) umfasst, um die eine oder die mehreren optischen Fasern (704) aufzunehmen, die sich jeweils von dem einen oder den mehreren Wellenrohren (702) erstrecken.

4. Rohrklemmanordnung (200) nach Anspruch 2 oder 3, worin der erste Abschnitt (212A) des zweiten Teils (212) dazu geeignet ist, das eine oder die mehreren Wellenrohre (702) aufzunehmen.

5. Rohrklemmanordnung (200) nach Anspruch 1, worin der erste Teil (210) eine oder mehrere Haltezungen (328) an einer äußeren Fläche umfasst und der zweite Teil (212) eine oder mehrere Aufnahmen (332) derart umfasst, dass die eine oder die mehreren Aufnahmen (332) dazu geeignet sind, die eine oder die mehreren Haltezungen (328) des zweiten Teils (212) aufzunehmen.

6. Rohrklemmanordnung (200) nach einem der Ansprüche 2-4, worin der erste Teil (210) ferner eine oder mehrere Verriegelungen (330) an einer inneren Fläche umfasst, die dazu geeignet sind, mit einem Wellenrohr des einen oder der mehreren Wellenrohre (702) in Eingriff gebracht zu werden.

7. Rohrklemmanordnung (200) nach Anspruch 1, worin die längliche Struktur (318) im Wesentlichen senkrecht um +-10 Grad zur kreisförmigen Bügelbasis (316) ist.

8. Rohrklemmanordnung (200) nach Anspruch 1, worin der Bügel (204) ferner ein Körperende (334) und ein Basisende (336) derart umfasst, dass das Körperende (334) am Rohrklemmkörper (202) montiert ist und das Basisende (336) dafür ausgelegt ist, an einer Basis (106) des Faserverschlusses (100) montiert zu werden.

9. Rohrklemmanordnung (200) nach Anspruch 1, worin die kreisförmige Bügelbasis (316) und die längliche Struktur (318) monolithische Strukturen sind.

10. Rohrklemmanordnung (200) nach Anspruch 1, worin die Rippe (214) ein erhöhter Abschnitt am Rohrklemmkörper (202) ist, der zwischen dem ersten Abschnitt (212A) und dem zweiten Abschnitt (212B) des zweiten Teils (212) angeordnet ist.

11. Faserverschluss (100) umfassend:
eine Basis (106), die eine erste Seite (107) und eine zweite Seite (108) hat;
einen oder mehrere Anschlüsse (104A-104E), die an der ersten Seite (107) der Basis (106) angeordnet sind, worin jeder Anschluss des einen oder der mehreren Anschlüsse (104A-104E) ein länglicher hohler Zylinder ist, der sich an der ersten Seite (107) der Basis (106) erstreckt;
eine oder mehrere Rohrklemmanordnungen (200) nach Anspruch 1.

12. Faserverschluss (100) nach Anspruch 11 und worin die eine oder die mehreren Rohrklemmanordnungen nach einem der Ansprüche 2-4 ausgestaltet sind, ferner umfassend
eine Abdeckung (102), die dazu geeignet ist, an der zweiten Seite (108) der Basis (106) abnehmbar angebracht zu werden;
eine Umwicklung (206), die aus einem komprimierbaren Element derart besteht, dass die Umwicklung (206) zwischen dem Bügel (204) und dem Rohrklemmkörper (202) angeordnet ist, worin die Umwicklung (206) ein oder mehrere Umwicklungsdurchgangslöcher (322) umfasst, um die eine oder die mehreren optischen Fasern (704) aufzunehmen, die sich jeweils von dem einen oder den mehreren Wellenrohren (702) erstrecken.

## Revendications

1. Ensemble de serrage de conduit (200) comprenant :
un corps de serrage de conduit (202) conçu pour venir en prise avec un orifice d'un ou plusieurs orifices (104A-104E) d'une enceinte hermétique de fibre (100), dans lequel le corps de serrage de conduit (202) comprend une ailette (214) qui est disposée de manière circonférentielle sur le corps de serrage de conduit (202) de sorte que l'ailette (214) permette l'insertion d'une longueur prédéfinie du corps de serrage de conduit (202) dans l'orifice des un ou plusieurs orifices (104A-104E) ;
dans lequel le corps de serrage de conduit (202) comprend en outre une première partie (210) présentant un ou plusieurs trous traversants (326) et une seconde partie (212) présentant une première portion (212A) et une seconde portion (212B) de sorte que la première portion (212A) comprend un ou plusieurs trous traversants (324), dans lequel les un ou plusieurs trous traversants (326) de la première partie (210) sont au moins partiellement insérés dans les un ou plusieurs trous traversants (324) de la première portion (212A) de la seconde partie (212) ; et
un support (204) comprenant une base circulaire (316) de support et une structure allongée (318) qui est sensiblement perpendiculaire à la base circulaire (316) de support, dans lequel le support (204) est monté à une extrémité proximale (302A) du corps de serrage de conduit (202)
**caractérisé en ce qu'**un moyen de mise en prise amovible (308) passe à partir des trous (326) de la première partie (210) et d'une fente (321) ménagée sur la base circulaire (316) de support du support (204), afin de coupler le support (204) au corps de serrage de conduit (202).

2. Ensemble de serrage de conduit (200) selon la revendication 1, dans lequel le support (204) comprend en outre un ou plusieurs trous traversants (320, 320A, 320B) de support conçus pour accueillir une ou plusieurs fibres optiques (704A-704E) s'étendant à partir d'un ou plusieurs conduits ondulés (702), respectivement.

3. Ensemble de serrage de conduit (200) selon la revendication 2, comprenant en outre une enveloppe (206) composée d'un élément compressible de sorte que l'enveloppe (206) est disposée de manière adjacente à l'extrémité proximale (302A) du corps de serrage de conduit (202),
dans lequel l'enveloppe (206) comprend un ou plusieurs trous traversants (322, 322A, 322B) d'enveloppe pour accueillir les une ou plusieurs fibres optiques (704) s'étendant à partir des un ou plusieurs conduits ondulés (702), respectivement.

4. Ensemble de serrage de conduit (200) selon la revendication 2 ou 3, dans lequel la première portion (212A) de la seconde partie (212) est conçue pour accueillir les un ou plusieurs conduits ondulés (702).

5. Ensemble de serrage de conduit (200) selon la revendication 1, dans lequel la première partie (210) comprend une ou plusieurs languettes de retenue (328) sur une surface externe et la seconde partie (212) comprend un ou plusieurs récepteurs (332) de sorte que les un ou plusieurs récepteurs (332) sont conçus pour recevoir les une ou plusieurs languettes de retenue (328) de la seconde partie (212).

6. Ensemble de serrage de conduit (200) selon l'une quelconque des revendications 2-4, dans lequel la première partie (210) comprend en outre un ou plusieurs éléments de verrouillage (330) sur une surface interne qui sont conçus pour venir en prise avec un conduit ondulé des un ou plusieurs conduits ondulés (702).

7. Ensemble de serrage de conduit (200) selon la revendication 1, dans lequel la structure allongée (318) est sensiblement perpendiculaire à +- 10 degrés à la base circulaire (316) de support.

8. Ensemble de serrage de conduit (200) selon la revendication 1, dans lequel le support (204) comprend en outre une extrémité de corps (334) et une extrémité de base (336) de sorte que l'extrémité de corps (334) est montée sur le corps de serrage de conduit (202) et l'extrémité de base (336) est configurée pour être montée sur une base (106) de l'enceinte hermétique de fibre (100).

9. Ensemble de serrage de conduit (200) selon la revendication 1, dans lequel la base circulaire (316) de support et la structure allongée (318) sont des structures monolithiques.

10. Ensemble de serrage de conduit (200) selon la revendication 1, dans lequel l'ailette (214) est une portion surélevée sur le corps de serrage de conduit (202) disposée entre la première portion (212A) et la seconde portion (212B) de la seconde partie (212).

11. Enceinte hermétique de fibre (100) comprenant :
une base (106) présentant un premier côté (107) et un second côté (108) ;
un ou plusieurs orifices (104A-104E) disposés sur le premier côté (107) de la base (106), dans laquelle chaque orifice des un ou plusieurs orifices (104A-104E) est un cylindre creux allongé s'étendant sur le premier côté (107) de la base (106) ;
un ou plusieurs ensembles de serrage de conduit (200) selon la revendication 1.

12. Enceinte hermétique de fibre (100) selon la revendication 11 et dans laquelle les un ou plusieurs ensembles de serrage de conduit sont conformes à l'une quelconque des revendications 2-4, comprenant en outre un couvercle (102) qui est conçu pour être fixé de manière amovible au second côté (108) de la base (106) ;
une enveloppe (206) composée d'un élément compressible de sorte que l'enveloppe (206) est disposée entre le support (204) et le corps de serrage de conduit (202), dans laquelle l'enveloppe (206) comprend un ou plusieurs trous traversants (322) d'enveloppe pour recevoir les une ou plusieurs fibres optiques (704) s'étendant à partir des un ou plusieurs conduits ondulés (702), respectivement.
